# EUROPEAN PATENT APPLICATION

(11) **EP 4 521 149 A1**
(43) Date of publication of application: **12.03.2025**
(21) Application number: 24195228.2
(22) Date of filing: 19.08.2024
(51) Int. Cl.: G02B 6/293, H04B 10/07

(54) **MULTICORE FIBER COUPLING DEVICE AND MULTICORE FIBER COUPLING METHOD**

(30) Priority: 07.09.2023 JP 2023145166
(71) Applicant: NEC Corporation, Tokyo 108-8001 (JP)
(72) Inventor: Katsukura, Daisuke, Tokyo, 108-8001 (JP)
(74) Representative: Vossius & Partner Patentanwälte Rechtsanwälte mbB

(57) **Abstract**

An MCF coupling device includes: a first MCF, a second MCF, and a third MCF, each of MCFs including cores; a first optical collimator that converts light output from cores included in the first MCF individually into collimated light and generates a group of light beams constituted of the collimated light; a first optical splitter that splits at least a part of the group of light beams, at a predetermined split ratio, in a first direction and in a second direction; a second optical collimator that couples each of beams of collimated light contained in the group of light beams being output in the first direction individually into cores in the second MCF; and a third optical collimator that couples each of beams of collimated light contained in the group of light beams being output in the second direction individually into cores in the third MCF.

## Description

This application is based upon and claims the benefit of priority from Japanese Patent Application No. 2023-145166, filed on September 7, 2023, the disclosure of which is incorporated herein in its entirety by reference.

### TECHNICAL FIELD

The present disclosure relates to an MCF coupling device and an MCF coupling method.

### BACKGROUND ART

Developments have been made for achieving a space division multiplexing optical transmission system using a multicore fiber (MCF). In the MCF, a single optical fiber includes a plurality of cores. Thus, by using an MCF instead of a single core fiber (SCF), a transmission capacity of an optical transmission system can be expanded.

In the middle of a transmission line using an MCF (MCF transmission line), an optical device such as an optical amplifier may be disposed. However, many optical devices employ an SCF as an interface and there are few optical devices that can be directly coupled to an MCF. Therefore, in order to couple an MCF to an optical device, a FIFO (fan-in/fan-out) device is used. The FIFO device is an optical component, one end of which is constructed from an MCF and another end of which is constructed from a plurality of SCFs. The FIFO device can couple each of a plurality of cores included in the MCF to an optical component employing the SCF as an interface. Thus, by using a FIFO device, an optical device employing the SCF as an interface can be inserted in an MCF transmission line.

In relation to the present disclosure, International Patent Publication No. WO2020/171103 describes an optical amplifier including a wavelength division multiplexing coupler for coupling an excitation light source into a multicore EDF.

For example, in a loopback circuit in an optical transmission system, a downstream optical signal is split and the downstream optical signal after splitting needs to be combined with an optical path for an upstream optical signal. For such splitting and combining, an optical coupler employing an SCF as an interface is used. For coupling the optical component employing the SCF as an interface to the MCF, a FIFO device is generally used as described above. Therefore, in order to split and combine light propagating through the MCF for each core, each core of the MCF needs to be transformed into an SCF by using a FIFO device and an optical coupler needs to be coupled to each SCF. However, in FIFO devices in practical use, loss increases as the number of cores increases, and when an MCF having a large number of cores is used as an optical transmission line, loss of an optical signal may increase due to loss caused by a FIFO device.

An object of the present disclosure is to provide a technique for splitting and combining light propagating through an MCF without using a FIFO device.

### SUMMARY

An MCF coupling device according to the present disclosure includes:
a first MCF (multicore fiber), a second MCF, and a third MCF, each of which is an MCF including a plurality of cores;
a first optical collimator that converts light being output from a plurality of cores included in the first MCF individually into collimated light on a one-to-one basis and generate a group of light beams constituted of the collimated light;
a first optical splitter that splits at least a part of the group of light beams at a predetermined split ratio, in a first direction and in a second direction different from the first direction;
a second optical collimator that couples each of a plurality of beams of collimated light included in the group of light beams being output in the first direction individually into a plurality of cores in the second MCF on a one-to-one basis; and
a third optical collimator that couples each of a plurality of beams of collimated light included in the group of light beams being output in the second direction individually into a plurality of cores in the third MCF on a one-to-one basis.

An MCF coupling method according to the present disclosure is an MCF coupling method for coupling between a first MCF (multicore fiber), a second MCF, and a third MCF, each of which is an MCF including a plurality of cores, and the method includes:
converting light being output from a plurality of cores included in the first MCF individually into collimated light on a one-to-one basis and generating a group of light beams constituted of the collimated light;
splitting at least a part of the group of light beams at a predetermined split ratio, in a first direction and in a second direction different from the first direction;
coupling each of a plurality of beams of collimated light included in the group of light beams being output in the first direction individually into a plurality of cores in the second MCF on a one-to-one basis; and
coupling each of a plurality of beams of collimated light included in the group of light beams being output in the second direction individually into a plurality of cores in the third MCF on a one-to-one basis.

The present disclosure provides a technique for splitting and combining light propagating through an MCF without using a FIFO device.

### BRIEF DESCRIPTION OF THE DRAWINGS

Exemplary features and advantages of the present disclosure will become apparent from the following detailed description when taken with the accompanying drawings in which:
Fig. 1 is a diagram illustrating a configuration example of an MCF coupling device;
Fig. 2 is a diagram illustrating a configuration example of an optical collimator;
Fig. 3 is a diagram illustrating a configuration example of an MCF coupling device;
Fig. 4 is a diagram for describing an example of optical paths in the MCF coupling device;
Fig. 5 is a diagram for describing an example of optical paths of monitoring light;
Fig. 6 is a diagram illustrating an example of wavelength characteristics of an optical splitter;
Fig. 7 is a diagram for describing an example of optical paths of the monitoring light;
Fig. 8 is a diagram for describing an example of an optical path of a return light;
Fig. 9 is a diagram illustrating a configuration example of an MCF transmission system;
Fig. 10 is a diagram illustrating a configuration example of the MCF transmission system; and
Fig. 11 is a diagram illustrating a configuration example of the MCF transmission system.

### EXAMPLE EMBODIMENT

Example embodiments of the present disclosure are described below with reference to the drawings. Directions of arrows illustrated in the figures exemplify directions of signals or the like and lengths and thicknesses of the arrows do not indicate strengths of the signals or the like. In the example embodiments and the drawings, components already described may be denoted by the same reference signs and redundant descriptions thereof may be omitted.

### (First example embodiment)

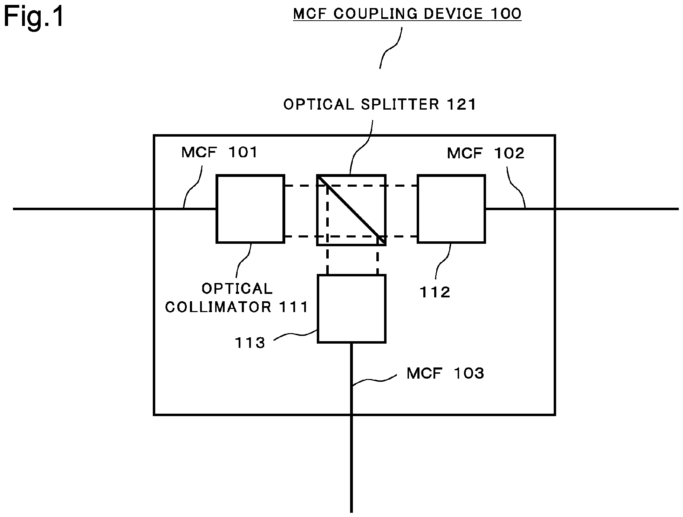

Fig. 1 is a diagram illustrating an example configuration of an MCF coupling device 100 according to the present disclosure. The MCF coupling device 100 includes MCFs 101 - 103, optical collimators 111 - 113, and an optical splitter 121. Each of the MCFs 101 - 103 is a multicore fiber including a plurality of cores. In the present disclosure, description is made on a case in which the numbers of cores in the MCFs 101 - 103 are the same.

The optical splitter 121 may be referred to as a first optical splitter. The MCF 101, the MCF 102, and the MCF 103 may be respectively referred to as a first MCF, a second MCF, and a third MCF. The optical collimator 111, the optical collimator 112, and the optical collimator 113 may be respectively referred to as a first optical collimator, a second optical collimator, and a third optical collimator.

The optical collimator 111 converts light emitted from a cross-sectional surface of each of a plurality of cores included in the MCF 101 into a single beam of collimated light. In other words, the optical collimator 111 converts light propagating through the plurality of cores in the MCF 101 individually into collimated light on a one-to-one basis. Thus, the optical collimator 111 converts light output from n cores in the MCF 101 into n beams of collimated light. The optical collimators 112 and 113 also have the same function as the optical collimator 111. A plurality of beams of collimated light propagating among the optical collimators 111 - 113 may be referred to as a group of light beams hereinafter. Beams of collimated light contained in the group of light beams do not overlap one another. In Fig. 1, beams of collimated light are not individually illustrated and dashed lines between the optical collimators 111 - 113 in Fig. 1 indicate a region where the group of light beams may be present. Note that, in the present disclosure, "collimated light" output from an optical collimator or input to an optical collimator includes, in addition to a case that the beam diameter of which does not change depending on a propagation distance through space, and light the beam diameter of which changes to an extent that allows optically coupling optical collimators.

The optical splitter 121 splits the group of light beams output from the optical collimator 111 into two at a predetermined split ratio, a group of light beams in a first direction and a group of light beams in a second direction. The collimated light that has not been split in the second direction propagates through the first direction. The first direction is, for example, the direction same as that of the group of light beams from the optical collimator 111 while the second direction is a direction perpendicular to the first direction. In other words, in Fig. 1, the first direction is the direction from the optical collimator 111 toward the optical collimator 112 while the second direction is the direction from the optical collimator 111 toward the optical collimator 113. However, the second direction may just have to be different from the first direction. The optical splitter 121 may split only some beams of the collimated light contained in the group of light beams at a predetermined split ratio.

As the optical splitter 121, one having specifications commonly used in free space optics may be used. For example, as schematically illustrated in Fig. 1, the optical splitter 121 may be constructed of two prisms and a thin film having predetermined characteristics for splitting light may be formed on bonded surfaces of these prisms. Fig. 1 illustrates an example in which each of the two prisms is a triangular prism having an isosceles right triangle on its underside and a thin film is formed on a side face including a hypotenuse of the isosceles right triangle. It is to be noted that the "optical splitter" in the present disclosure has, similarly to commonly used optical splitters, not only a function to split light but also a function to combine light. Characteristics of optical splitters for splitting or combining light include, for example, reflectance, transmittance, a coupling rate, and wavelength characteristics. The optical splitters are manufactured in such a way that these characteristics have predetermined values.

The optical collimator 112 couples the plurality of beams of collimated light contained in the group of light beams that have passed through the optical splitter 121 into the cores in the MCF 102 on a one-to-one basis. In other words, the optical collimator 112 couples each of the plurality of beams of collimated light contained in the group of light beams that are output from the optical splitter 121 in the first direction individually into the plurality of cores in the MCF 102 on a one-to-one basis.

The optical collimator 113 couples the collimated light contained in the group of light beams that are output from the optical collimator 111 and reflected by the optical splitter 121 into the cores in the MCF 103 on a one-to-one basis. In other words, the optical collimator 113 couples each of the plurality of beams of collimated light contained in the group of light beams that are output from the optical splitter 121 in the second direction individually into the plurality of cores in the MCF 103 on a one-to-one basis.

Propagating directions of light in the MCF coupling device 100 are not limited to those described above. For example, the optical collimator 112 may convert light input from the MCF 102 to a group of light beams and output the group of light beams to the optical splitter 121. In this case, the optical splitter causes a portion or all of the group of light beams to pass through toward the optical collimator 111. The collimated light that has passed through the optical splitter 121 can be coupled individually into the cores in the MCF 101 through the optical collimator 111 on a one-to-one basis. Similarly, the collimated light that is output from the optical collimator 113 and reflected by the optical splitter 121 may be coupled individually into the plurality of cores in the MCF 101 through the optical collimator 111 on a one-to-one basis.

The MCF coupling device 100 having this configuration can split and combine light propagating between MCFs without using a FIFO device. It is because the MCF coupling device 100 couples the MCFs 101 - 103 at each core via an optical system including the optical collimators 111 - 113 and also includes the optical splitter 121 between the optical collimators 111 - 113.

### (An example configuration of the optical collimator)

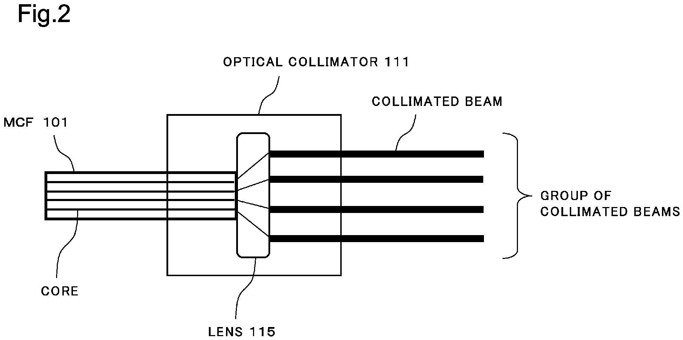

Fig. 2 is a diagram illustrating an example configuration of the optical collimator 111. The optical collimators 112 and 113 also have the same configuration as the optical collimator 111. The optical collimator 111 includes a lens 115, one end of which is optically coupled to light emitted from the cores in the MCF 101. The lens 115 converts light output from the MCF 101 individually into collimated light for each core and outputs the collimated light as a group of light beams from the other end of the lens 115. Propagation directions of individual collimated light are parallel to one another. In other words, when the MCF 101 includes n cores, the lens 115 converts light emitted from the n cores into n beams of collimated light. n is a natural number. Fig. 2 illustrates an example in which the number of cores in the MCF 101 is four (n = 4). It is to be noted that the number of cores in each of the MCFs is not limited to four in the present disclosure.

As described above, the lens 115 converts light output from the cores individually into collimated light. A configuration of the lens 115 is not limited. For example, the lens 115 is a lens that optically magnifies the cross-sectional surface of the MCF 101. Alternatively, a lens array may be used as the lens 115. The lens array has a configuration in which microlenses are arranged on a plane. The microlenses individually correspond to the cores in the MCF 101 on a one-to-one basis and the microlenses are arranged in such a way as to enable a single microlens to convert light output from a single core in the MCF 101 into collimated light. The cores in the MCFs 101 -103 are optically coupled via the optical collimators 111 - 113 having this configuration on a one-to-one basis.

### (Second example embodiment)

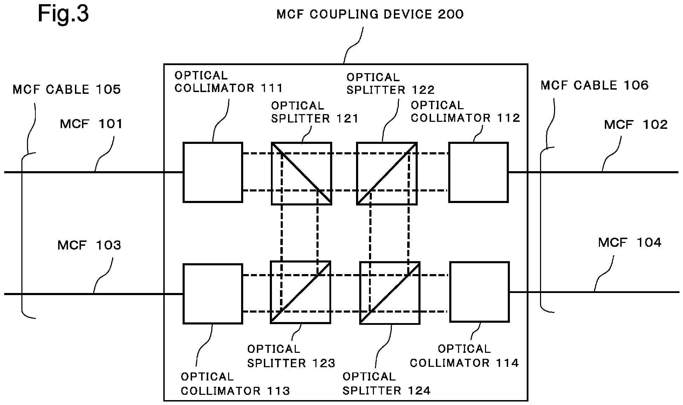

Fig. 3 is a diagram illustrating an example configuration of an MCF coupling device 200 according to the present disclosure. The MCF coupling device 200 includes MCFs 101 - 104, optical collimators 111 - 114, and optical splitters 121 - 124. Each of the MCFs 101 - 104 is a multicore fiber including a plurality of cores. The MCFs 101 and 103 are contained in an MCF cable 105 while the MCFs 102 and 104 are contained in an MCF cable 106. In the present disclosure, description is made assuming that the numbers of cores n in the MCFs 101 - 104 are the same. The MCFs 101, 102, 103, and 104 may be respectively referred to as a first MCF, a second MCF, a third MCF, and a fourth MCF. The optical collimators 111, 112, 113, and 114 may be respectively referred to as a first optical collimator, a second optical collimator, a third optical collimator, and a fourth optical collimator.

The optical collimators 111 - 114 individually convert light emitted from cross-sectional surfaces of the MCFs 101 - 104 into collimated light for each core. In other words, the optical collimators 111 - 113 individually convert light output from the plurality of cores included in the MCFs 101 - 103 into collimated light similarly to the MCF coupling device 100. The optical collimator 114 converts light output from the plurality of cores included in the MCF 104 into collimated light on a one-to-one basis.

The MCF coupling device 200 additionally includes, compared to the MCF coupling device 100, optical splitters 123 and 124 as well as an optical collimator 114 and an MCF 104. The optical splitters 121 and 122 are disposed between the optical collimator 111 and the optical collimator 112. The optical splitters 123 and 124 are disposed between the optical collimator 113 and the optical collimator 114. The optical splitters 121 - 124 may be independent optical components and the MCF coupling device 200 may have a structure in which two or more of these optical splitters are integrated.

The optical splitter 122 may be referred to as a second optical splitter. The optical splitters 123 and 124 may be referred to, in combination, as a third optical splitter, and the optical splitters 123 and 124 may be respectively referred to as a fourth optical splitter and a fifth optical splitter. In other words, the third optical splitter includes the fourth optical splitter and the fifth optical splitter.

In the MCF coupling device 200, the cores in the MCF 101 are individually optically coupled to the cores in the MCF 102 on a one-to-one basis. The cores in the MCF 101 are individually optically coupled to the cores in the MCF 103 on a one-to-one basis. The cores in the MCF 103 are individually optically coupled to the cores in the MCF 104 on a one-to-one basis. In addition, the cores in the MCF 102 are individually optically coupled to the cores in the MCF 103 on a one-to-one basis. Propagating directions of light in these couplings are not limited.

The optical collimators 111 and 112 are disposed in such a way that the MCF 101 is coupled to the MCF 102 at each core via optical paths passing through the optical splitters 121 and 122. The optical collimators 113 and 114 are disposed in such a way that the MCF 103 is coupled to the MCF 104 at each core via optical paths passing through the optical splitters 123 and 124. In addition, the optical collimators 111 and 113 are disposed in such a way that the MCF 101 is coupled to the MCF 103 at each core via optical paths generated by light being reflected by the optical splitters 121 and 123. Furthermore, the optical collimators 112 and 113 are disposed in such a way that the MCF 102 is coupled to the MCF 103 at each core via optical paths generated by light being reflected by the optical splitters 122 and 124 and passing through the optical splitter 123.

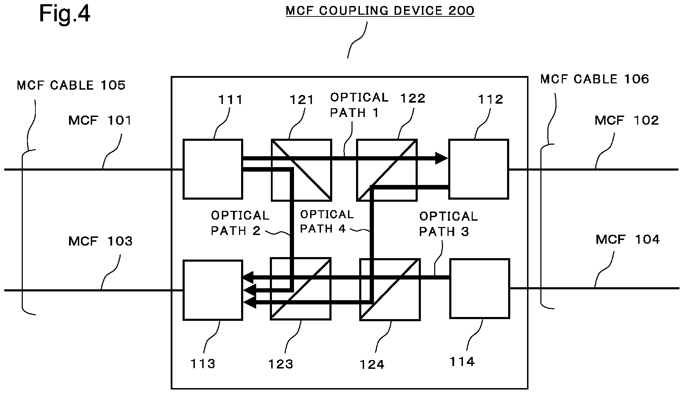

Fig. 4 is a diagram for describing optical paths of a group of light beams propagating inside the MCF coupling device 200. Arrows in Fig. 4 simply indicate optical paths of the group of light beams and do not indicate a position of specific collimated light. In Fig.4, a group of light beams that is output from the optical collimator 111 and passes through the optical splitters 121 and 122 at a predetermined transmittance is coupled into the optical collimator 112 (optical path 1). In contrast, a group of light beams that is output from the optical collimator 111 and reflected by the optical splitters 121 and 123 at a predetermined reflectance is coupled into the optical collimator 113 (optical path 2).

A group of light beams that is output from the optical collimator 114 and passes through the optical splitters 124 and 123 at a predetermined transmittance is coupled into the optical collimator 113 (optical path 3). And a group of light beams that is output from the optical collimator 112, reflected by the optical splitters 122 and 124 at a predetermined reflectance, and further passes through the optical splitter 123 at a predetermined transmittance is coupled into the optical collimator 113 (optical path 4).

The MCF coupling device 200 having this configuration can split and combine light signals propagating between the MCFs 101 - 104 without using a FIFO device. It is because the MCF coupling device 200 couples the MCFs 101 - 104 at each core via an optical system including the optical collimators 111 - 114 and also includes the optical splitter 121 - 124 between the optical collimators 111 - 114.

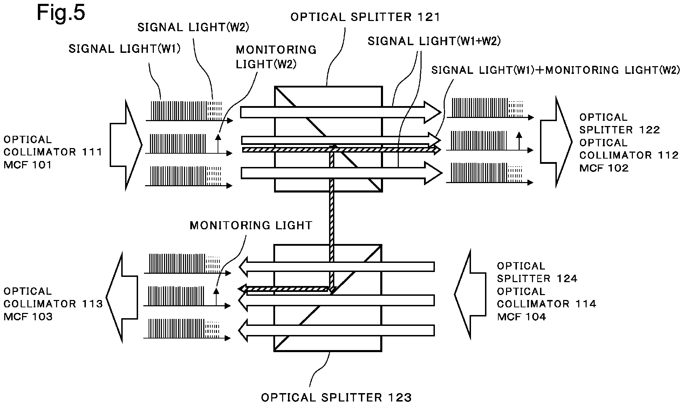

With reference to Fig. 5 to Fig. 7, a loopback circuit using the MCF coupling device 200 is described. Fig. 5 is a diagram illustrating an example configuration of the MCF coupling device 200, in which the optical splitters 121 and 123 are extracted. As will be described below, light in a wavelength range including a wavelength of monitoring light can be looped back from the MCF 101 to the MCF 103 by using the optical splitters 121 and 122.

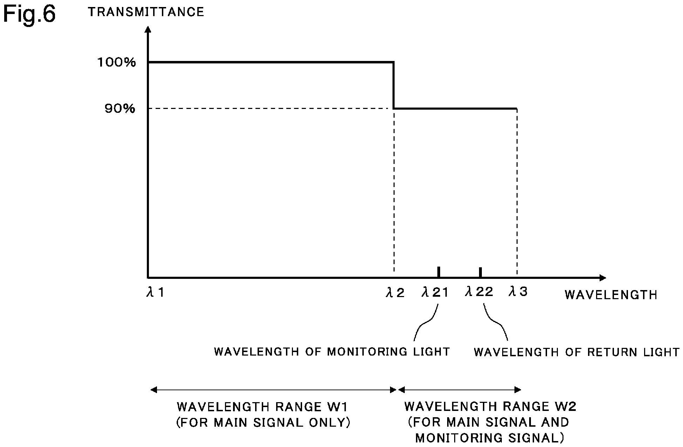

Fig. 6 illustrates an example of wavelength characteristics of the optical splitter 121. Transmittance of the optical splitter 121 in a wavelength range W1 (first wavelength range) is 100% and transmittance of the optical splitter 121 in a wavelength range W2 (second wavelength range) is 90%. The range of the wavelength range W1 is λ1 or greater and less than λ2 while the range of the wavelength range W2 is λ2 or greater and less than λ3. In the present disclosure, transmittance being 100% means that transmission loss of the optical splitter 121 is negligibly small. The optical splitter 123 is a half mirror having transmittance of 90% (in other words, reflectance of 10%). In the present disclosure, a term "half mirror" is also used when transmittance is not 50%.

Light propagating through the MCF 101 may include signal light and monitoring light. The signal light is an optical signal containing user data and the signal light is transmitted from n optical transmitters coupled to the other end of the MCF 101 to the n cores in the MCF 101. n denotes the number of cores in each of the MCFs 101 - 104. The signal light is independently transmitted by using the n cores in the MCF 101. The wavelength range W1 is used for transmission of the signal light. The wavelength range W2 is used for transmission of the signal light or the monitoring light. The wavelength range W1 and the wavelength range W2 do not overlap. The wavelength characteristics illustrated in Fig. 6 indicate that the optical splitter 121 splits collimated light having a predetermined wavelength at a split ratio different from that for the collimated light having other wavelengths. The predetermined wavelength is a wavelength within a wavelength range including the wavelength of the monitoring light.

The signal light is a WDM (wavelength division multiplexing) signal in which two or more carriers are multiplexed by means of wavelength division multiplexing. The monitoring light is an optical signal used for monitoring an optical transmission line, and does not contain user data. The monitoring light is looped back from the MCF 101 to the MCF 103 by the MCF coupling device 200. The monitoring light is transmitted by using only one carrier having a wavelength of λ21. How the wavelength ranges W1 and W2 are allocated to the signal light and the monitoring light is different for each core. Monitoring an MCF transmission line is usually performed for each MCF. Therefore, only one core of the plurality of cores included in the MCF 101 is used for transmission of the monitoring light. In other words, in the MCFs 101 - 104, the wavelength range including the wavelength of the monitoring light is allocated to only one core. In a core that uses the wavelength W2 for transmission of the monitoring light, the wavelength range W2 is not used for transmission of the signal light. In a core that does not use the wavelength W2 for transmission of the monitoring light, the wavelength range W2 may be used for transmission of the signal light.

In Fig. 5, the optical signal that has propagated through the MCF 101 is converted by the optical collimator 111 into a group of light beams. The monitoring light is transmitted by a single core in the MCF 101. In other words, the monitoring light is contained in a single collimated light contained in a group of light beams. Fig. 5 illustrates three beams of collimated light by way of example, and only the one in the center of the three beams of collimated light contains the monitoring light. In the collimated light containing the monitoring light, the signal light is transmitted by using only the wavelength range W1. In the other two beams of collimated light, the signal light is transmitted by using the wavelength ranges W1 and W2. The optical splitter 121 reflects light in the wavelength range W2 that is a wavelength range including the wavelength of the monitoring light at reflectance of 10% and outputs the reflected light toward the optical splitter 123. The optical splitter 121 transmits light in the wavelength range W1 that is a wavelength range not including the wavelength of the monitoring light at transmittance of 100% and outputs the transmitted light toward the optical splitter 122. The optical splitter 123 reflects the light in the wavelength range W2 reflected by the optical splitter 121 at reflectance of 10% and outputs the reflected light toward the optical splitter 113. In this case, the optical splitter 123 combines the group of light beams that propagates from the MCF 104 to the MCF 103 and the group of light beams reflected by the optical splitter 121 and outputs the combined group of light beams to the optical collimator 113.

The MCF coupling device 200 having this configuration can couple the MCF 104 to the MCF 102 at each core and loop back the monitoring light that has propagated through the MCF 101 to the MCF 103. Since both reflectance of the optical splitter 121 and reflectance of the optical splitter 123 are 10% (loss of 10 dB) with respect to the monitoring light, loss of the monitoring light to be looped back is approximately 20 dB in total. This is equivalent to loss of the monitoring light in a commonly used loopback circuit. Thus, by coupling the other end of the MCF 103 to a commonly used optical receiver, the monitoring light can be detected by the optical receiver. Note that it is configured in advance that the wavelength range W2 is not to be used for light that is transmitted as collimated light and that is to be combined by the optical splitter 123 with the monitoring light among the light propagating through the MCF 102.

In the configuration illustrated in Fig. 5, when the signal light in the wavelength range W2 is contained in any one beam of the collimated light output from the optical collimator 111, the signal light in the wavelength range W2 is also reflected by the optical splitter 121 at reflectance of 10%. The light reflected by the optical splitter 121 is combined by the optical splitter 123 with the collimated light that has propagated through the MCF 104. It is to be noted that both the light reflected by the optical splitter 121 and the signal light in the collimated light that propagates from the MCF 104 to the MCF 103 may use the wavelength range W2 and may be directed to the same core in the MCF 103. In such a case, interference may occur between beams of the signal light in the collimated light directed to the core.

In order to avoid occurrence of such an interference, it is preferred that only the collimated light containing the monitoring light propagates from the optical splitter 121 to the optical splitter 123. For example, the MCF coupling device 200 may have a configuration in which only the collimated light containing the monitoring light to be looped back (hereinafter, referred to as monitoring collimated light) is transmitted from the optical splitter 121 to the optical splitter 123. This configuration can prevent the signal light in the wavelength range W2 that has propagated through the MCF 101 from being combined by the optical splitter 123 with light in the wavelength range W2 that has propagated through the MCF 104. As described above, it is configured in advance, for the light that is input from the MCF 104 and combined by the optical splitter 123 with the monitoring light, that the wavelength range W2 is not used for the signal light.

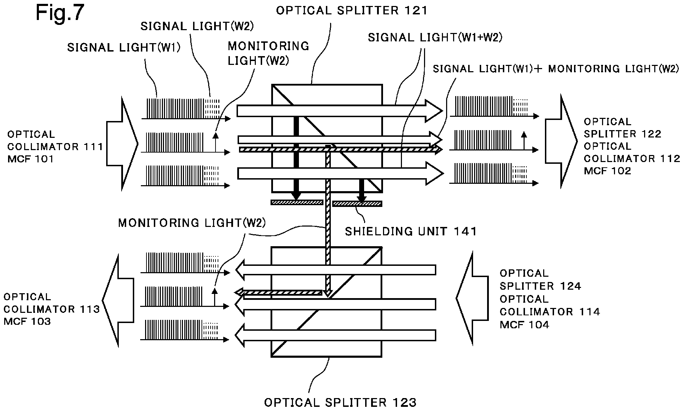

Fig. 7 is a diagram illustrating a variation in which modification is made on the configuration associated with the optical splitter 121 illustrated in Fig. 5. In the present variation, a shielding unit 141 is disposed between the optical splitter 121 and the optical splitter 123. The shielding unit 141 is provided with an aperture (opening). The aperture allows only the monitoring collimated light to propagate from the optical splitter 121 to the optical splitter 123 and blocks other light. The shielding unit 141 is, for example, an opaque plate disposed between the optical splitter 121 and the optical splitter 123 that has a small aperture only at a position where the monitoring collimated light enters. In other words, the shielding unit 141 outputs only the monitoring collimated light among the group of light beams reflected by the optical splitter 121. Alternatively, the shielding unit 141 may be a thin film formed on an end face of a prism integrated with the optical splitter 121 or the optical splitter 123. The thin film is transparent with respect to the wavelength λ21 of the monitoring light only at a position through which the monitoring collimated light propagates and other portions of the thin film are opaque with respect to the wavelength ranges W1 and W2. With this configuration, the optical splitter 121 can output only the collimated light containing the monitoring light to the optical splitter 123, thereby preventing signal light in the wavelength range W2 from being combined by the optical splitter 123. Thus, the configuration illustrated in Fig. 7 can prevent interference in the MCF 103 caused by the signal light from the MCF 101 being looped back to a core other than the core used for loopback of the monitoring light.

The optical splitter 121 may be coupled to the optical splitter 123 via an optical waveguide that allows the monitoring collimated light to propagate therethrough. With this configuration, an effect of a stray light that exists between the optical splitter 121 and the optical splitter 122 on the monitoring light can be prevented.

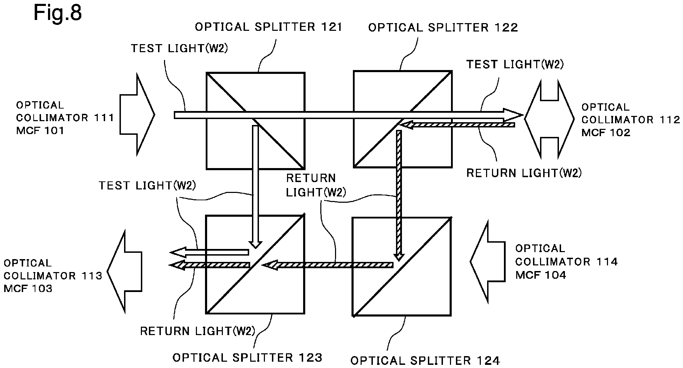

Fig. 8 is a diagram illustrating an example configuration of the MCF coupling device 200, in which the optical splitters 122, 123, and 124 are extracted. With reference to Fig. 8, an optical path (the optical path 4 illustrated in Fig. 4) between the optical collimator 112 and the optical collimator 113 through the optical splitters 122, 123, and 124 is described. For purposes of brevity, only a test light input from the MCF 101 and a return light generated correspondingly are illustrated in Fig. 8.

In Fig. 8, the optical splitter 122 is an optical filter having the wavelength characteristics illustrated in Fig. 6 and the optical splitters 123 and 124 are half mirrors having transmittance of 90%. In other words, transmittance of the optical splitter 122 in the wavelength range W1 is 100% and transmittance of the optical splitter 122 in the wavelength range W2 is approximately 90%. As will be described below, the optical splitter 122 is used for guiding light (return light) propagating through the MCF 102 in a direction opposite to the signal light from the MCF 102 to the MCF 103.

In an optical fiber transmission line, a return light may propagate in a direction opposite to light propagating through the transmission line. The return light is generated due to a non-linear phenomenon that occurs in the optical fiber. There is known a technique for monitoring a condition of an optical fiber transmission line by transmitting a test light (light pulse) in the optical fiber transmission line and analyzing a return light generated therein. For such monitoring, it is preferred that the test light is input from an optical transmitter in an OTDR (optical time domain reflectometer) coupled to the MCF 101 and the return light can be analyzed by using an optical receiver coupled to the MCF 102. Since the MCFs 101 and 102 are housed in the same MCF cable 105, an optical transceiver unit in the OTDR can be installed in the same station building.

In the configuration illustrated in Fig. 8, the return light propagating through the MCF 102 in the direction opposite to the test light is guided through the optical collimator 113 to the MCF 103. The return light is then detected by the optical receiver in the OTDR coupled to the other end of the MCF 103. By analyzing the detected return light, information related to conditions of the MCF 102 and the optical fiber transmission line beyond the MCF 102 can be obtained.

In general, a wavelength λ22 of the return light generated due to a non-linear phenomenon is different from that of the test light. In Fig. 8, a wavelength of the test light is set in such a way that both the wavelength of the test light and a wavelength of the return light are within the wavelength range W2. If the wavelength λ22 of the return light is within the wavelength range W2, the wavelength of the test light may be λ21, the same as that of the monitoring light.

The test light is input to a single core selected by the OTDR among the plurality of cores included in the MCF 101. When observation of the return light is performed, transmission of the signal light using the core through which the test light and the return light propagate may be stopped. The return light that has propagated through the MCF 102 is converted by the optical collimator 112 into collimated light for each core. The optical splitter 122 reflects light in the wavelength range W2 that is a wavelength range containing the return light and outputs the reflected light toward the optical splitter 124. The optical splitter 124 combines the optical signal that propagates from the MCF 104 to the MCF 103 and the return light reflected by the optical splitter 122 for each beam of collimated light and outputs the combined collimated light to the optical splitter 123. The core for observing the return light is assumed to be the same core as the one for transmitting the test light and one of the plurality of cores in the MCF 102.

The optical splitter 123 illustrated in Fig. 8 combines the return light input from the optical splitter 124 and the test light reflected by the optical splitter 121 for each beam of collimated light and outputs the combined collimated light to the optical collimator 113. The optical collimators 111 - 114 are optically coupled in such a way that the effect described above can be obtained by coupling the cores of the MCFs 101 - 104.

Since the MCF coupling device 200 has the configuration illustrated in Fig. 3, the MCF coupling device 200 can couple the cores of the MCFs 101 - 104 on a one-to-one basis. The MCF coupling device 200 can guide the return light that has propagated through the MCF 102 to the MCF 103. By coupling the other end of the MCF 103 to the optical receiver in the OTDR, the optical receiver can receive the return light and monitor the condition of the MCF 102.

### (Third example embodiment)

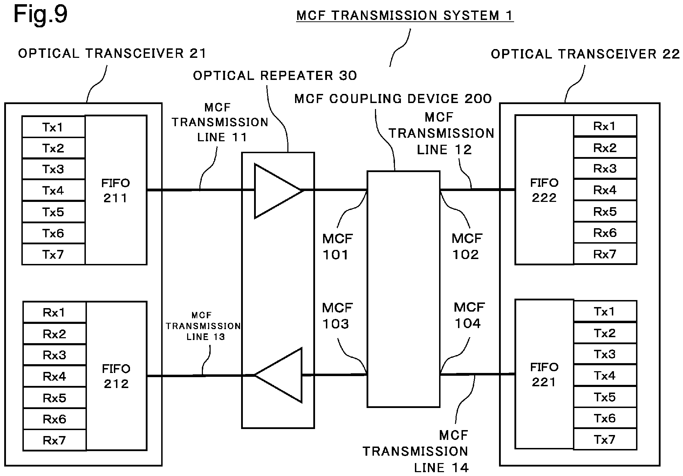

An MCF transmission system using the MCF coupling device 200 is described. Fig. 9 is a diagram illustrating an example configuration of the MCF transmission system 1 according to the present disclosure. The MCF transmission system 1 includes MCF transmission lines 11 - 14, the MCF coupling device 200, an optical repeater 30, and optical transceivers 21 and 22. The MCF transmission lines 11 - 14 are coupled to the MCF coupling device 200 through the MCFs 101 - 104. In this figure, each of the MCF transmission lines 11 -14 and the MCF coupling device 200 includes a seven-core MCF. The MCFs 101 - 104 are illustrated as interfaces for coupling the MCF transmission lines 11 - 14 to the MCF coupling device 200. The MCF transmission lines 11 - 14 may be individually coupled to the MCFs 101 - 104 by fusion splicing or using an optical connector.

The optical transceiver 21 includes seven optical transmitters Tx1 - Tx7, seven optical receivers Rx1 - Rx7, and FIFO devices 211 and 212. The seven optical transmitters included in the optical transceiver 21 are coupled to different cores in the MCF transmission line 11 by using the FIFO device 211. The seven optical receivers included in the optical transceiver 21 are coupled to different cores in the MCF transmission line 13 by using the FIFO device 212. The optical transmitters and the optical receivers included in the optical transceiver 22 are similarly respectively coupled to the MCF transmission lines 12 and 14 by using FIFO devices 221 and 222.

Signal light transmitted by the optical transmitters Tx1 - Tx7 (first optical transmitters) in the optical transceiver 21 is respectively received by the optical receivers Rx1 - Rx7 (second optical receivers) in the optical transceiver 22. Signal light transmitted by the optical transmitters Tx1 - Tx7 (second optical transmitters) in the optical transceiver 22 is respectively received by the optical receivers Rx1 - Rx7 (first optical receivers) in the optical transceiver 21.

The optical transceiver 21 transmits downstream signal light to the seven cores in the MCF transmission line 11. The downstream signal light is transmitted from the MCF transmission line 11 to the MCF transmission line 12 and received by the optical transceiver 22. The optical transceiver 22 transmits upstream signal light to the seven cores in the MCF transmission line 14. The upstream signal light is transmitted from the MCF transmission line 14 to the MCF transmission line 13 and received by the optical transceiver 21. The optical repeater 30 includes two MCF optical amplifiers that use an MCF as an amplifying medium, and one of the MCF optical amplifiers amplifies light in a downstream direction while the other of the MCF optical amplifiers amplifies light in an upstream direction. The MCF optical amplifiers are directly coupled to the MCF transmission line 11, the MCF transmission line 13, and the MCF coupling device 200 without a FIFO device. The MCF coupling device 200 has the configuration described in the second example embodiment.

For example, in Fig. 9, the downstream signal light transmitted by the Tx1 in the optical transceiver 21 is amplified by the optical repeater 30, passes through the MCF coupling device 200 via the optical path 1 illustrated in Fig. 4, propagates through the MCF transmission line 12, and is received by the Rx1 in the optical transceiver 22. The upstream signal light transmitted by the Tx1 in the optical transceiver 22 passes through the MCF coupling device 200 via the optical path 3 illustrated in Fig. 4, propagates through the optical repeater 30 and the MCF transmission line 13, and is received by the Rx1 in the optical transceiver 21.

In contrast, when the Tx1 in the optical transceiver 21 transmits downstream monitoring light, a portion of the downstream monitoring light is amplified by the optical repeater 30, and looped back to the MCF transmission line 13 via the optical path 2 illustrated in Fig. 4. In another example, when a core in the optical transceiver 21 coupled to the Tx1 is coupled to the OTDR and a test light is output to the core, a return light generated due to the test light propagating through the MCF transmission line 12 in the downstream direction propagates from the MCF transmission line 12 to the MCF transmission line 13 via the optical path 4 illustrated in Fig. 4. The return light that has propagated through the MCF transmission line 13 is received by a core coupled to the Rx1 in the optical transceiver 21.

In this manner, in addition to the upstream signal light, the looped-back monitoring light and the return light generated in the MCF transmission line 12 are input to the optical transceiver 21 from the MCF transmission line 13. With this configuration, the optical transceiver 21 can receive the downstream monitoring light or the return light from the MCF transmission line 12 in addition to the upstream signal light.

In the MCF transmission system 1, when a FIFO device is used in a loopback circuit, in order to compensate loss caused by the FIFO device, an output from the optical repeater 30 needs to be increased, which increases power consumption of the optical repeater 30. In view of this, for an optical circuit that guides the monitoring light or the return light to an optical receiver, a configuration not including a FIFO device is preferred in order to reduce insertion loss in the optical circuit.

In the MCF transmission system 1, as the optical circuit that allows the monitoring light or the return light to be received by the optical receiver, the MCF coupling device 200 is used. The MCF coupling device 200 can split light propagating through cores in the MCF transmission lines 11-14 and couple the light into cores in other MCFs without using a FIFO device. Thus, by using the MCF coupling device 200, the MCF transmission system 1 can combine the monitoring light or the return light with the signal light without using a FIFO device.

### (Fourth example embodiment)

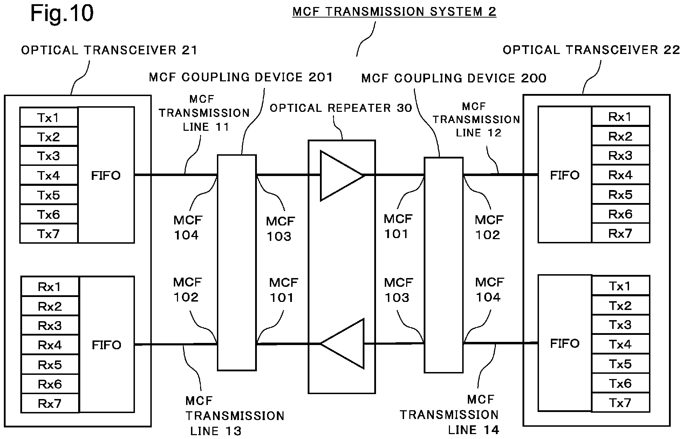

Fig. 10 is a diagram illustrating an example configuration of an MCF transmission system 2 according to the present disclosure. The MCF transmission system 2 is a system in which an MCF coupling device 201 is added to the MCF transmission system 1 illustrated in Fig. 9. The MCF coupling device 201 provides a function of the MCF coupling device 200 associated with the optical transceiver 21 to the optical transceiver 22. In other words, the MCF coupling device 201 not only constitutes a loopback circuit for the monitoring light transmitted by the optical transceiver 22 but also guides the return light propagating through the MCF transmission line 13 toward the optical receiver 22 to the optical transceiver 22 through the MCF transmission line 12. The configuration of the MCF coupling device 201 in the MCF transmission system 2 is the same as that of the MCF coupling device 200. The arrangement of the MCF coupling device 201 in Fig. 10 is intended to cause the MCF coupling device 200 in Fig. 9 to be applied to the light in the opposite direction. Therefore, detailed description thereof is omitted.

With this configuration, the optical transceiver 22 coupled to the MCF transmission line 12 can receive the monitoring light looped back from the MCF transmission line 14 and the return light propagating through the MCF transmission line 13 in a direction opposite to the upstream signal light in addition to the downstream signal light. With this configuration, the MCF transmission system 2 can monitor the monitoring light and the return light in the downstream and upstream directions.

### (Fifth example embodiment)

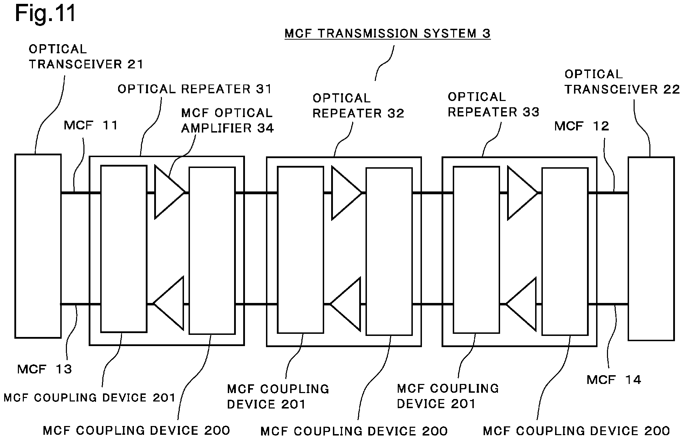

Fig. 11 is a diagram illustrating an example configuration of an MCF transmission system 3 according to the present disclosure. In the MCF transmission system 3, cascade-connected optical repeaters 31 to 33 are disposed between the optical transceiver 21 and the optical transceiver 22. Each of the optical repeaters 31 to 33 includes two MCF optical amplifiers 34. One of the two MCF optical amplifiers 34 amplifies light in a downstream direction while the other amplifies light in an upstream direction. Each of the optical repeaters 31 to 33 includes the MCF coupling device 200 and the MCF coupling device 201, which have been described with respect to the MCF transmission system 2, before and after the MCF optical amplifier 34. With this configuration, the MCF transmission system 3 can transmit the monitoring light and the return light that propagate through sections before and after the optical repeaters 31 to 33 to the optical transceiver 21 or 22. Thus, the MCF transmission system 3 can monitor the MCF transmission lines in sections before and after the optical repeaters 31 to 33.

The example embodiments of the present disclosure may be described as in the following supplementary notes, but are not limited to the following.

### (Supplementary note 1)

An MCF coupling device including:
a first MCF (multicore fiber), a second MCF, and a third MCF, each of which is an MCF including a plurality of cores;
a first optical collimator that converts light being output from a plurality of cores included in the first MCF individually into collimated light on a one-to-one basis and generates a group of light beams constituted of the collimated light;
a first optical splitter that splits at least a part of the group of light beams, at a predetermined split ratio, in a first direction and in a second direction different from the first direction;
a second optical collimator that couples each of a plurality of beams of collimated light contained in the group of light beams being output in the first direction individually into a plurality of cores in the second MCF on a one-to-one basis; and
a third optical collimator that couples each of a plurality of beams of collimated light contained in the group of light beams being output in the second direction individually into a plurality of cores in the third MCF on a one-to-one basis.

### (Supplementary note 2)

The MCF coupling device according to supplementary note 1, wherein beams of collimated light contained in the group of light beams do not overlap one another.

### (Supplementary note 3)

The MCF coupling device according to supplementary note 1 or 2, wherein the first optical splitter splits collimated light having a predetermined wavelength among collimated light contained in the group of light beams at a split ratio different from that for collimated light having other wavelengths.

### (Supplementary note 4)

The MCF coupling device according to supplementary note 3, wherein the predetermined wavelength is a wavelength within a wavelength range including a wavelength of monitoring light.

### (Supplementary note 5)

The MCF coupling device according to supplementary note 1 or 2, wherein the first optical splitter splits only collimated light containing the monitoring light among collimated light contained in the group of light beams.

### (Supplementary note 6)

The MCF coupling device according to supplementary note 5, wherein the first optical splitter is provided with an aperture that allows only collimated light containing the monitoring light to pass through.

### (Supplementary note 7)

The MCF coupling device according to any one of supplementary notes 1 to 5, further including:
a fourth MCF;
a fourth optical collimator that converts light being output from a plurality of cores included in the fourth MCF individually into collimated light on a one-to-one basis and generates a group of light beams constituted of the collimated light; and
a second optical splitter that combines the group of light beams in the second direction, being generated after splitting, with the group of light beams generated by the fourth optical collimator, wherein
the third optical collimator couples each of a plurality of beams of collimated light being combined by the second optical splitter, individually into a plurality of cores in the third MCF on a one-to-one basis.

### (Supplementary note 8)

The MCF coupling device according to supplementary note 7, further including a third optical splitter, wherein
the second optical collimator converts light being output from a plurality of cores included in the second MCF individually into collimated light on a one-to-one basis and generates a group of light beams constituted of the collimated light, and
the third optical splitter combines the group of light beams generated by the second optical collimator with the group of light beams generated by the fourth optical collimator.

### (Supplementary note 9)

The MCF coupling device according to supplementary note 8, wherein the third optical splitter includes:
a fourth optical splitter that changes a direction of the group of light beams generated by the second optical collimator, the fourth optical splitter being disposed between the first optical collimator and the second optical collimator; and
a fifth optical splitter that combines the group of light beams, a direction of which is changed by the fourth optical splitter, with the group of light beams generated by the fourth optical collimator.

### (Supplementary note 10)

An MCF transmission system including:
an optical transmitter that transmits signal light to the first MCF;
an optical receiver that receives signal light from the third MCF; and
the MCF coupling device according to any one of supplementary notes 1 to 8.

### (Supplementary note 11)

An MCF transmission system including:
a first optical transmitter that transmits signal light to the first MCF;
a first optical receiver that receives signal light from the third MCF;
a second optical transmitter that transmits signal light to the fourth MCF;
a second optical receiver that receives signal light from the second MCF; and
the MCF coupling device according to any one of supplementary notes 1 to 8.

### (Supplementary note 12)

An MCF coupling method for coupling between a first MCF (multicore fiber), a second MCF, and a third MCF, each of which is an MCF including a plurality of cores, the method including:
converting light being output from a plurality of cores included in the first MCF individually into collimated light on a one-to-one basis and generating a group of light beams constituted of the collimated light;
splitting at least a part of the group of light beams, at a predetermined split ratio, in a first direction and in a second direction different from the first direction;
coupling each of a plurality of beams of collimated light contained in the group of light beams being output in the first direction individually into a plurality of cores in the second MCF on a one-to-one basis; and
coupling each of a plurality of beams of collimated light contained in the group of light beams being output in the second direction individually into a plurality of cores in the third MCF on a one-to-one basis.

### (Supplementary note 13)

The MCF coupling method according to supplementary note 12, wherein beams of collimated light contained in the group of light beams are arranged in such a way as not to overlap one another.

### (Supplementary note 14)

The MCF coupling method according to supplementary note 12 or 13, wherein collimated light having a predetermined wavelength among collimated light contained in the group of light beams is split at a split ratio different from that for collimated light having other wavelengths.

### (Supplementary note 15)

The MCF coupling method according to supplementary note 14, wherein the predetermined wavelength is a wavelength within a wavelength range including a wavelength of monitoring light.

### (Supplementary note 16)

The MCF coupling method according to supplementary note 14 or 15, wherein only collimated light containing the monitoring light among collimated light contained in the group of light beams is split.

### (Supplementary note 17)

The MCF coupling method according to supplementary note 16, wherein only collimated light containing the monitoring light is allowed by an aperture to pass through.

Although the present disclosure has been described above with reference to the example embodiments, the present disclosure is not limited to the aforementioned example embodiments. Various modifications that can be understood by those skilled in the art may be made to the configurations or details of the present disclosure within the scope of the present disclosure. For example, the present disclosure may be applied not only to optical submarine cable systems but also to onshore optical transmission systems. Descriptions of the MCF coupling device in respective example embodiments have disclosed the configuration of the MCF transmission system including the MCF coupling device as well as the MCF coupling method.

The configurations described in respective example embodiments are not entirely mutually exclusive. Functions and effects of the present disclosure may be achieved by combining all or a portion of the configurations of the example embodiments described above.

### REFERENCE SIGNS LIST

1 to 3 MCF Transmission system
11 to 14 MCF Transmission line
21, 22 Optical transceiver
211, 212, 221, 222 FIFO Device
30 to 33 Optical repeater
34 MCF Optical amplifier
100, 200, 201 MCF Coupling device
101 to 104 MCF
105, 106 MCF Cable
111 to 114 Optical collimator
115 Lens
121 to 124 Optical splitter
141 Shielding unit
Rx1 to Rx7 Optical receiver
Tx1 - Tx7 Optical transmitter

## Claims

1. An MCF coupling device (100) comprising:
a first MCF (multicore fiber)(101), a second MCF (102), and a third MCF (103), each of which is an MCF including a plurality of cores;
a first optical collimator (111) adapted to convert light being output from a plurality of cores included in the first MCF individually into collimated light on a one-to-one basis and generate a group of light beams constituted of the collimated light;
a first optical splitter (121) adapted to split at least a part of the group of light beams, at a predetermined split ratio, in a first direction and in a second direction different from the first direction;
a second optical collimator (112) adapted to couple each of a plurality of beams of collimated light contained in the group of light beams being output in the first direction individually into a plurality of cores in the second MCF on a one-to-one basis; and
a third optical collimator (113) adapted to couple each of a plurality of beams of collimated light contained in the group of light beams being output in the second direction individually into a plurality of cores in the third MCF on a one-to-one basis.

2. The MCF coupling device according to claim 1, wherein beams of collimated light contained in the group of light beams do not overlap one another.

3. The MCF coupling device according to claim 1 or 2, wherein the first optical splitter splits collimated light having a predetermined wavelength among collimated light contained in the group of light beams at a split ratio different from that for collimated light having other wavelengths.

4. The MCF coupling device according to claim 3, wherein the predetermined wavelength is a wavelength within a wavelength range including a wavelength of monitoring light.

5. The MCF coupling device according to claim 1 or 2, wherein the first optical splitter splits only collimated light containing the monitoring light among collimated light contained in the group of light beams.

6. The MCF coupling device according to claim 5, wherein the first optical splitter is provided with an aperture adapted to allow only collimated light containing the monitoring light to pass through.

7. The MCF coupling device according to claim 1 or 2, further comprising:
a fourth MCF (104);
a fourth optical collimator (114) adapted to convert light being output from a plurality of cores included in the fourth MCF individually into collimated light on a one-to-one basis and generate a group of light beams constituted of the collimated light; and
a second optical splitter (123) adapted to combine the group of light beams in the second direction, being generated after splitting, with the group of light beams generated by the fourth optical collimator, wherein
the third optical collimator couples each of a plurality of beams of collimated light being combined by the second optical splitter, individually into a plurality of cores in the third MCF on a one-to-one basis.

8. The MCF coupling device according to claim 7, further comprising a third optical splitter (122,124), wherein
the second optical collimator converts light being output from a plurality of cores included in the second MCF individually into collimated light on a one-to-one basis and generates a group of light beams constituted of the collimated light, and
the third optical splitter combines the group of light beams generated by the second optical collimator with the group of light beams generated by the fourth optical collimator.

9. The MCF coupling device according to claim 8, wherein the third optical splitter includes:
a fourth optical splitter (122) adapted to change a direction of the group of light beams generated by the second optical collimator, the fourth optical splitter being disposed between the first optical collimator and the second optical collimator; and
a fifth optical splitter (124) adapted to combine the group of light beams, a direction of which is changed by the fourth optical splitter, with the group of light beams generated by the fourth optical collimator.

10. An MCF transmission system comprising:
the MCF coupling device according to any one of claims 1 to 8;
an optical transmitter adapted to transmit signal light to the first MCF; and
an optical receiver adapted to receive signal light from the third MCF.

11. An MCF transmission system comprising:
the MCF coupling device according to any one of claims 1 to 8;
a first optical transmitter adapted to transmit signal light to the first MCF;
a first optical receiver adapted to receive signal light from the third MCF;
a second optical transmitter adapted to transmit signal light to the fourth MCF; and
a second optical receiver adapted to receive signal light from the second MCF.

12. An MCF coupling method for coupling between a first MCF (multicore fiber), a second MCF, and a third MCF, each of which is an MCF including a plurality of cores, the method comprising:
converting light being output from a plurality of cores included in the first MCF individually into collimated light on a one-to-one basis and generating a group of light beams constituted of the collimated light;
splitting at least a part of the group of light beams, at a predetermined split ratio, in a first direction and in a second direction different from the first direction;
coupling each of a plurality of beams of collimated light contained in the group of light beams being output in the first direction individually into a plurality of cores in the second MCF on a one-to-one basis; and
coupling each of a plurality of beams of collimated light contained in the group of light beams being output in the second direction individually into a plurality of cores in the third MCF on a one-to-one basis.

13. The MCF coupling method according to claim 12, wherein beams of collimated light contained in the group of light beams are arranged in such a way as not to overlap one another.

14. The MCF coupling method according to claim 12 or 13, wherein collimated light having a predetermined wavelength among collimated light contained in the group of light beams is split at a split ratio different from that for collimated light having other wavelengths.

15. The MCF coupling method according to claim 14, wherein the predetermined wavelength is a wavelength within a wavelength range including a wavelength of monitoring light.
